# EUROPEAN PATENT SPECIFICATION

(11) **EP 3 814 238 B1**
(45) Date of publication and mention of the grant of the patent: **26.03.2025**
(21) Application number: 19736458.1
(22) Date of filing: 28.06.2019
(51) Int. Cl.: B65B 31/02, B65B 7/16, B65B 7/28

(54) **CARTRIDGE SEALING APPARATUS**
KARTUSCHENVERPACKUNGSGERÄT
APPAREIL A SCELLER LES CARTOUCHES

(30) Priority: 29.06.2018 GB 201810694
(43) Date of publication of application: 05.05.2021
(73) Proprietor: Randox Laboratories Ltd., Northern Ireland BT29 4QY (GB)
(72) Inventor: MORAN, James, Randalstown, Antrim, Northern Ireland BT41 4NP (GB); WILSON, Mark, Lisburn, Northern Ireland BT28 2BL (GB)
(74) Representative: Gill Jennings & Every LLP
(86) International application number: PCT/GB2019/051832
(87) International publication number: WO 2020/002934

(56) References cited:
- EP-A1- 0 032 820
- EP-A1- 1 252 008
- EP-A1- 2 441 683
- EP-A2- 1 842 776
- WO-A1-00/38992
- WO-A1-2011/092103
- WO-A2-2009/144714
- WO-A2-97/49609
- DE-A1- 102013 010 221
- GB-A- 1 440 922
- GB-A- 1 440 922
- KR-B1- 101 439 755
- US-A- 3 583 125
- US-A- 4 997 664
- US-A1- 2012 324 835

## Description

### FIELD OF THE INVENTION

The present invention relates to an apparatus used to seal a cartridge. The apparatus is intended to be used to seal a foil sheet to a cartridge and cut the foil sheet once sealed to the cartridge.

### BACKGROUND

In medical testing, such as drug testing or diagnostic testing, it is common for a fluid or sample to be analysed to identify some or all of the constituents. This is achieved through adding one or more reagents to the sample.

It is frequently necessary to test a sample to identify multiple different substances. This is usually achieved by separating the sample into portions and adding different reagents to each portion.

In order to reduce the amount of time taken to test a sample, in mechanised testing, a cartridge is used that contains either multiple reagents, each loaded into an individual test site or the same reagent loaded into each test site when multiple samples are to be tested. To avoid contamination each test site needs to be sealed during manufacture after the reagent has been added to each test site. The most efficient way to achieve this is to seal all the test sites with a single piece of material covering all the test sites on a single cartridge. Although alternative materials can be used, conventionally, a sheet of metal foil with a bonding layer is used to provide the seal.

Previously, to seal a cartridge, a piece of foil that has been pre-cut to the appropriate shape is placed on the cartridge in a suitable position. To achieve a suitable seal, the pre-cut foil is placed very carefully on the cartridge so that it is accurately placed and is then pressed onto the cartridge using a manually operated die-cut apparatus. However, we have found that this process is not repeatable and is open to risk since it does not reliably provide a completely sealed diagnostic cartridge. There was therefore a need to provide a more reliable sealing means and process.

In the development of the invention, it was attempted to use a sheet of foil that was cut to the correct shape at the same time as the seal was produced. However, this was found to cause wrinkles in the foil, causing the seal to be compromised.

Two other types of process were then considered in the development of the invention. However, these either required human intervention in the process, which is undesirable, or would have taken too long while also being susceptible to the foil placement issues mentioned above.

The same issues that apply to testing samples with reagents apply to other situations and industries. As such, whether the cartridge is for chemical or non-chemical applications, an apparatus is needed that is able to seal a material to a cartridge in a reliable and repeatable manner.

GB 1440922 A discloses a method of closing a container, comprising heat-sealing a portion of an indexable web of closure material to the rim around the open end of a container, clamping the web between two apertured plates while a knife severs excess closure material around the entire periphery of said rim when the rim and closure material are at least partially heat-sealed to one another, and forming down around the container a portion of the severed closure material which extends around and beyond the rim of the container. The web is also damped during the heat-sealing operation.

EP 1842776 A2 discloses an apparatus comprising a horizontal drawer with an opening through which the body of the tray to be packaged can pass, said tray with its edge resting on the upper, horizontal and flat side of an annular rim which surrounds the said opening and, around this rim, the drawer has a continuous annular channel, the outer shoulder of which has a height greater than that of the inner shoulder and opens out on the upper side of the said drawer which is thus at a height greater than that of the said rim and the upper edge of the tray positioned on the latter.

US 2012/0324835 A1 discloses a method for sealing at least a packaging unit by means of a sealing tool lower part carrying the packaging unit, a sealing tool upper part, and a sealing plate.

EP 0032820 A1 discloses a method of producing a package of a product comprising taking a shape-retaining container having a charging opening, charging the container with the product to a level which leaves a substantial headspace and, in any suitable order, a) completely sealing the opening with a closure of stretchable material, and b) deforming the closure inwardly onto the product to reduce the headspace and continuing the deformation, to move product adjacent the closure into the remaining headspace, until the headspace is eliminated by the continued movement of product and closure.

DE 10 2013 010221 discloses an apparatus and a method for sealing trays with a film, the blades cutting the film being lowered so that the cut of the film is made on the circumferential edge of the tray.

### SUMMARY OF INVENTION

According to a first aspect of the invention, there is provided a cartridge sealing apparatus according to claim 1.

We have found that by sealing a cartridge with a sealing member before cutting the sealing member and holding the sealing member while cutting it, a reliable and effective seal of the cartridge is able to be produced. Additionally, a suitable seal on the cartridge is able to be formed quickly (for example within about 5 to 10 seconds), consistently and in a repeatable manner without needing precise placement of the sealing member over the cartridge.

The cartridge may be a chemical cartridge suitable for holding one or more chemical reagents. We have found that by sealing a chemical cartridge with the sealing apparatus of the first aspect a seal is able to be provided that improves isolation of the chemicals from the environment external to the cartridge lowering the risk of contamination and exposure and increasing the amount of time the cartridge is able to be stored and still provide suitable results when the used.

The sealing head and cutting edge may be configured to move separately to each other and/or for the sealing head to carry out one movement to seal the cartridge and cutting edge to carry out a second movement to cut the sealing member. Typically however, the sealing head and cutting edge are adapted to move in a single continuous movement relative to each other to seal the sealing member to the cartridge and cut the sealing member. This allows the cartridge to be sealed and the sealing member to be cut in a single linked operation. This means that this stage of processing a cartridge can be processed in a single location and without the need to change tools during the operation.

The seal may be achieved only through the application of pressure to the sealing member in combination with the bonding layer, though typically, the cartridge sealing apparatus further comprises a heater configured to provide heat to the sealing head in use. This may be applied when the sealing member is used with a bonding layer that lacks an adhesive (such as a chemical adhesive component). When a sealing member is used with an adhesive layer (i.e. a bonding layer that uses adhesive to provide bonding), heating can be applied using a heater, but may not be needed. Applying heating to the sealing head using a heater allows a seal to be achieved when adhesives are not used, alloying non-adhesive layers to be used instead of adhesives which can be unreliable or become adhered to items inadvertently.

The heater may provide heat independently of the sealing head, but typically, the heater is thermally coupled to the sealing head. This allows heat to be applied to the sealing member by the sealing head. This avoids the need for a further component independent of the sealing head and cutting edge and allows heat to be applied to the sealing member uniformly across the area of the sealing surface.

Preferably, the heater may be located within the sealing head. This reduces the amount of heat lost to the external environment or to other components improving the efficiency of the heating of the sealing head.

The heater may be any form of heater. Typically, the heater is a heating pad having a shape corresponding to the shape of the sealing surface. This improves the uniformity of the heat provided to the sealing member at the sealing surface.

Preferably, the heater may be configured to heat the sealing surface to about 200 degrees centigrade (°C). We have found that when heated to this temperature an improved seal is able to be achieved without damage being caused to components of the cartridge or the cartridge sealing apparatus. In an example, the heater may be set to heat to 200°C. As set out below, this results in the sealing surface having a surface temperature of about 180 °C. This has been found to occur in an example where a pressure of 1000 Newtons per square centimetre (N/cm²) is applied at the sealing surface.

Typically, the sealing head may further comprise a heat sink. This allows more uniform heating to be achieved due to the heat sink spreading heat though its volume thereby avoiding hotspots forming.

The temperature of the sealing head may be monitored using any form of temperature monitoring. Typically, the cartridge sealing apparatus further comprises a temperature sensor coupled to the sealing head. This allows the temperature of the sealing head to be directly monitored so that any adjustments to the power provided to the heater can be made based on direct measurements. This also allows the temperature of the sealing head to be known instantaneously and accurately thereby avoiding power being wasted by raising the temperature of the sealing head too much.

Preferably, the temperature sensor forms part of the heater. This allows a temperature measurement to be taken at the heat source instead of at a point separated from the heat source where the temperature measurement may not be representative of the heat produced by the heater due to the heat dissipating. This thereby can be assist in avoiding the heater from overheating since a direct temperature measurement at the heat source means the temperature of the heater is known.

The cutting edge is a knife blade with a chisel grind having a first side parallel to a side of the sealing head and a second side at an angle to the first side. This shape of knife blade reduces adhesion of the sealing member to the knife blade reducing the likelihood of the sealing member being torn following the sealing member being cut.

The second side is on a proximal side of the cutting edge to the sealing head. This causes the second side to seal the sealing member to the cartridge as part of the cutting process since the sealing member is cut at the join between the first side and the second side. Should the first side be located on the proximal side of the cutting edge to the sealing head, then the second side cutting edge would seal the sealing member to the cartridge on the distal side of the cut from the part of the sealing member that is sealed over the cartridge. This would cause that portion of the sealing member sealed to the cartridge to then need to be removed later during the processing of the cartridge, which complicates the sealing process.

The cutting edge is arranged around the perimeter of the sealing surface so as to cut the sealing member at the perimeter of the sealing surface. This avoids there being any non-sealed portions of the sealing member between the sealed section provided by the sealing head and the cut edge of the sealing member.

The cutting edge and the sealing head may be separate parts. Typically however, the sealing head and cutting edge form a unitary body, the sealing head being moveable relative to the cutting edge to move the cutting edge between the unextended position and the extended position. This provides linked components within the cartridge sealing apparatus allowing more closely linked movement of the sealing head and cutting edge. This simplifies the movement that needs to be applied to the cartridge sealing apparatus to seal the sealing member to the cartridge and cut the sealing member and avoids having two parts that can become separated during the processing of a cartridge.

The sealing head and the cutting edge may be held in any position relative to each other. Typically, the sealing head is urged to a first position in which the cutting edge is in the unextended position. This allows the cutting edge to be kept in the unextended position when the cartridge apparatus is not in use. This improves safety for a user and avoids the cutting edge catching on anything and causing damage.

Preferably, a biasing member may be configured to urge the sealing head into the first position. Typically, the biasing member is a resiliently deformable member.

The resiliently deformable member may be any component capable of urging the sealing head into a first position. Typically, the resiliently deformable member is an array of compression springs. This allows force to be applied to the sealing head evenly allowing uniform pressure to be applied to the sealing head and therefore at the sealing surface.

The sealing head may be moveable from the first position in a number of ways. Typically, the sealing head may be moveable from the first position to a second position by the application of a first force having a component perpendicular to the sealing surface when the sealing head is holding the sealing member against the cartridge thereby sealing the cartridge, the cutting edge being closer to the sealing surface in the second position than in the first position. This allows the sealing member to be sealed to the cartridge before the sealing member is cut so as to achieve a reliable seal of a sufficient quality without cutting of the sealing member compromising the seal.

Preferably, the sealing head may be adapted to apply uniform pressure to the sealing member on movement of the sealing head from the first position to the second position. This allows the seal between the sealing member and the cartridge to be even and reduces the likelihood of the sealing member slipping relative to the cartridge during the sealing process.

Following movement of the sealing head to the second position, the sealing head may be moveable to any further position. Typically, the sealing head is moveable from the second position to a third position by application of a second force having a component perpendicular to the sealing surface when the sealing head is holding the sealing member against the cartridge, movement of the sealing head from the second to the third position causing the cutting edge to move from the unextended position to the extended position. This allows the sealing member to be cut while still applying pressure to the sealing member.

Preferably, the second force may be greater than the first force. This causes extra pressure to be applied to the sealing member to hold it in place while it is cut. It also causes an increase in the speed of movement of the cutting edge allowing the cutting process to be carried out quickly reducing the likelihood of the sealing member being torn while being cut.

The sealing head may be made out of any suitable material. Typically, the sealing head is made of Invar. This limits thermal expansion of the sealing head reducing the potential for the sealing heat to come into contact with the cutting edge and getting stuck against the cutting edge thereby jamming and being prevented from moving.

The sealing head may be adapted to apply a pressure of between about 0.1 Newtons per square millimetre (N/mm²) and about 10 N/mm², or preferably between about 0.5 N/mm² and 5 N/mm². Preferably, the sealing head may be adapted to apply a pressure of about 0.90 N/mm² at the sealing surface to seal the cartridge. The pressure applied by the sealing head may be dependent on the sealing member, the area over which the pressure is applied and/or size and arrangement of the sealing head. Further, a pressure of 20 N/mm² is able to be applied. This pressure or higher pressures may be used in larger sealing applications.

Preferably, the sealing head may be adapted to apply a pressure of about 1.89 N/mm² at the sealing surface when the cutting edge moves from the unextended position to the extended position. Again, this pressure may be dependent on criteria set out in the previous paragraph.

According to a second aspect of the invention, there is provided method according to claim 13.

Preferably, the sealing member may be sealed to the cartridge before the sealing member is cut.

The sealing head and cutting edge may be moved in any suitable manner for sealing and cutting the sealing member. Typically, the sealing head and cutting edge move in a single continuous movement relative to each other to seal the sealing member to the cartridge and cut the sealing member.

Typically, a first pressure may be applied to the sealing member when sealing the sealing member to the cartridge, and the method may further comprise applying a second pressure to the sealing member at the sealing surface when cutting the sealing member. Preferably, the second pressure is greater than the first pressure.

### BRIEF DESCRIPTION OF FIGURES

An example of a cartridge sealing apparatus is described in detail below, with reference to the accompanying figures, in which:
Figure 1 shows an example reagent cartridge which the cartridge sealing apparatus is used to seal;
Figure 2 shows an example cartridge sealing apparatus;
Figure 3 shows an exploded view of the example cartridge sealing apparatus shown in Figure 2;
Figure 4 shows an exploded view of an example sealing head;
Figure 5 shows a cross-sectional view of the example sealing head shown in Figure 4;
Figure 6 shows a partial exploded view of the example sealing head shown in Figure 4;
Figure 7 shows a further partial exploded view of the example sealing head shown in Figure 4;
Figure 8 shows a cross-sectional view of a portion of the example sealing head shown in Figure 4;
Figure 9A shows a cross-sectional view of a portion of an example cartridge sealing apparatus not according to the claimed invention;
Figure 9B shows a cross-sectional view of a portion of an alternative example cartridge sealing apparatus to that shown in Figure 9A;
Figure 10 shows a schematic view of an initial stage of a sealing process;
Figure 11 shows a schematic view of a sealing stage of the sealing process;
Figure 12 shows a cross-sectional view of the example cartridge shown in Figure 2 during the sealing stage of the sealing process;
Figure 13 shows a schematic view of a cutting stage of the sealing process; and
Figure 14 shows a cross-sectional view of the example cartridge shown in Figure 2 during the cutting stage of the sealing process.

### DETAILED DESCRIPTION

We now describe one example of a cartridge sealing apparatus and a method of sealing a cartridge. The cartridge sealing apparatus is part of a larger production line used to fill and seal a chemical cartridge.

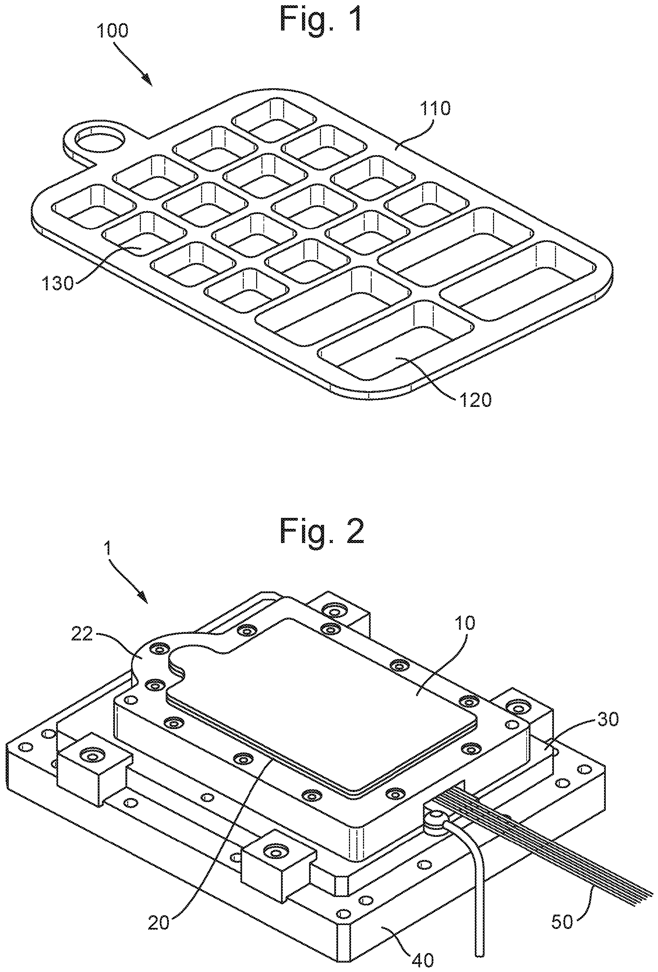

In this example the cartridge is a chemical cartridge, and as such, the sealing apparatus is a chemical cartridge sealing apparatus. As shown in Figure 1, the chemical cartridge 100 itself is formed of a plate 110 in which a number of wells 120, 130 are formed. The plate is about 10 millimetres (mm) to 120 mm wide, about 30 mm to 200 mm in length and about 10 mm to 30 mm thick. The chemical cartridge shown in Figure 1 has a plurality of larger wells 120 and a plurality of smaller wells 130.

Before being sealed, each chemical cartridge 100 is placed underneath a chemical reagent dispensing array nozzle. Reagents are then dispensed into each of the wells 120, 130 as required for the purpose for which the chemical cartridge is intended to be used.

The chemical cartridge 100 is then removed from underneath the array nozzle and is placed underneath the chemical cartridge sealing apparatus 1, which is generally illustrated, inverted, in Figure 2.

As is shown in Figure 2, the chemical cartridge sealing apparatus 1 has a sealing head 10 around which a cutting edge 20 is located. The cutting edge forms part of a retaining plate 22 that limits movement of the sealing head as is described below. The retaining plate is attached to a base plate 30, which in turn is attached to an isolation plate 40. There is also an electrical connection provided by wires 50, which connects to the sealing head.

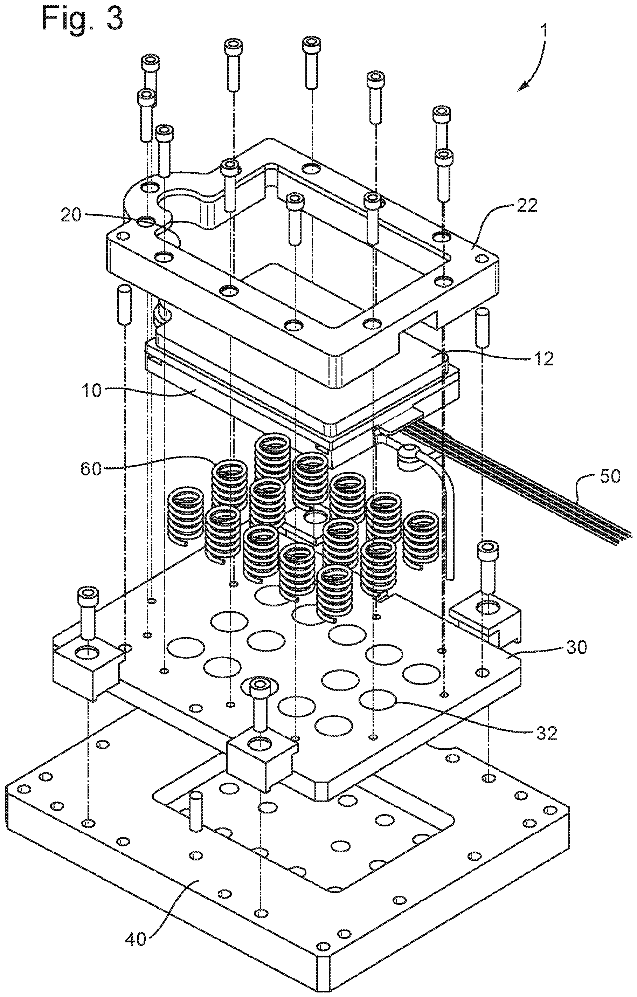

The base plate 30 provides support for the retaining plate 22 and the sealing head 10. Support is provided by the base plate for the sealing head in that the sealing head 10 is biased by compression springs 60 (shown in Figure 3) positioned between the sealing head and the base plate 30 to a position in which a portion of the sealing head projects past the cutting edge 20. This is achieved by the springs applying a force to the sealing head away from the base plate. When not in use, this causes the sealing head to protrude from the cutting edge, exposing a sealing surface 12 (shown in Figure 3) of the sealing head.

In order to provide suitable support, in this example, the base plate is made of En24T steel. This is because En24T steel is a high tensile alloy steel that is suitable for high stress environments and has low thermal expansion (of about 12 microns per metre Kelvin (µm/m·K)).

The isolation plate 40 provides thermal and electrical insulation to the base plate 30, the retaining plate 22 and the sealing head 10. This is achieved by the isolation plate being made of polyether ether ketone (PEEK) in this example.

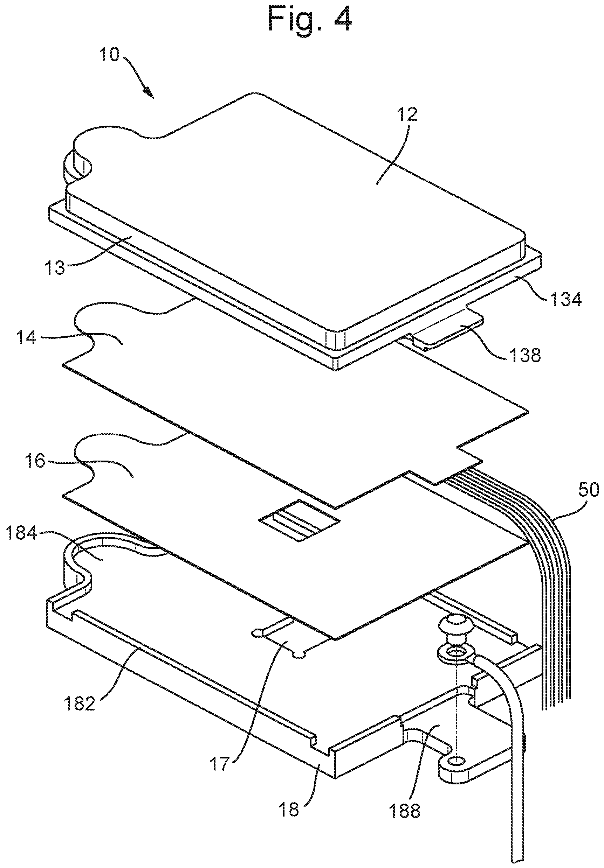

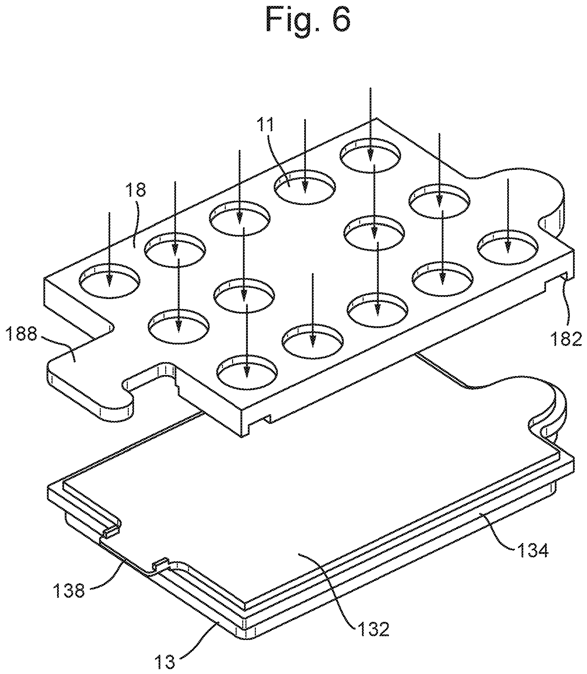

The sealing head 10 is shown in more detail in Figure 4. This shows an exploded view of the sealing head, which includes a pressure plate 13, an outward face surface of which provides the sealing surface 12. An inward facing surface 132 (shown in Figure 6) of the pressure plate forms an interference fit with a heating pad 14 due to contact between the pressure plate and heating pad. The shape of the heating pad matches the shape of the inwardly facing surface of the pressure plate. This assists in providing uniform heating to the pressure plate.

The heating pad 14 is also is in contact with a sheet of ceramic paper 16 on the opposite side of the heating pad to that in contact with the pressure plate 13. The ceramic paper provides thermal insulation between the heating pad and a backing plate 18 to which the opposing side of the ceramic paper is in contact and thereby forms an interference fit with. This causes the heat to be directed towards the sealing surface and ensures good contact between the heating pad and the sealing surface due to the compression the ceramic paper applies to the heating pad. The backing plate 18 acts as a heat sink so that any heat that passes to the backing plate is spread across the plate. This helps keep the temperature of the sealing head 10 as uniform as possible when heat is applied using the heating pad.

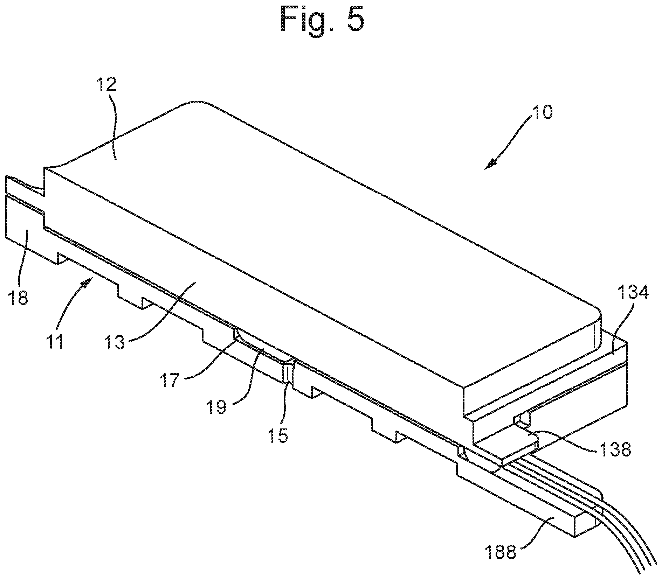

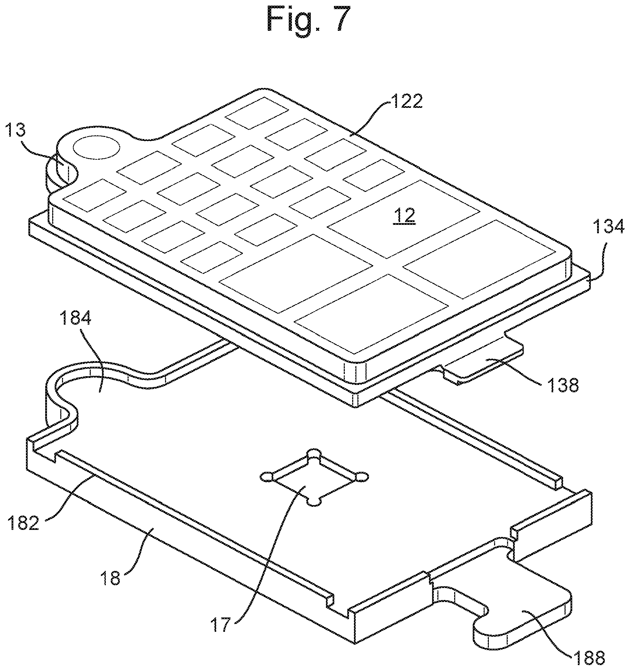

The heating pad 14 is an electrical heating pad to which power is supplied by wires 50. To monitor the temperature of the heating pad, a sensor 19, shown in Figure 5 and which is also connected to the wires, is provided in a blind bore 17 (also shown in Figure 7) in the backing plate 18. The sensor extends through an aperture in the ceramic paper 16 (shown in Figure 4) to the heating pad with which it is in contact. Where the sensor is in contact with the heating pad, the heating pad has a non-heated zone (not shown) where it does not produce heat when switched on.

As shown in Figure 5, there is a vent hole 15 through the backing plate 18 from the blind bore 17 to the exterior of the backing plate. This allows for gas ingress and egress from the blind bore due to thermal expansion and contraction of the gas due to the heat generated by the heater and the corresponding thermal cycling of any gas and of the components.

Figure 5 also shows recesses 11 formed in an opposing side of the backing plate 18 against which the ceramic paper 16 is held in the assembled apparatus.

As mentioned above, this produces an interference fit between the backing plate and the ceramic paper.

When the chemical cartridge apparatus is assembled, one of the springs 60 is located in each recess. As shown in Figure 6, the recesses are arranged in an array in the form of a regular grid across the backing plate with an element of the array missing in the position on that side of the backing plate that corresponds to the position of the sensor on the opposing side of the backing plate. As shown in Figure 3, there are corresponding recesses 32 in the base plate 30 into which an opposing end of each spring is located.

The arrangement of the recesses 11 in the array on the backing plate 18 allows the springs 60 to apply force evenly across the backing plate so that pressure is able to be applied evenly at the sealing surface 12. In total, there is a deflection across the backing plate caused by the force applied by the springs of about 0.02 mm at room temperature and pressure when the chemical cartridge sealing apparatus is assembled. The ceramic paper 16 and the heating pad 14 are able to be compressed. Because of this, and the interference fit between the backing plate, the ceramic paper 16, heating pad 14 and the pressure plate 13 the maximum deflection of the pressure plate at room temperature when the chemical cartridge sealing apparatus is assembled is about 20 microns (µm).

The electrical connection by wires 50 to the heating pad 14 is also show in Figure 5. This figure shows that the pressure plate 13 has a projection 138 outwards from its side with the wires connecting to the heating pad on the face of the heating pad facing the backing plate. The backing plate also has a projection 188 at this location which projects further from the side of the backing plate than the projection of the pressure plate projects from the side of the pressure plate. These projections provide surfaces between which the wires are sandwiched at the point they terminate. This offers support and a mounting face to secure the wires to in order to prevent unnecessary stresses on the cables during the sealing procedure that would otherwise be caused by the movement of the sealing head.

As mentioned above, Figure 6 shows the array of recesses 11 on the backing plate 18. Figure 6, along with Figure 7, also shows that the backing plate has an upstanding wall 182 around its perimeter. The wall causes a recess 184 (shown in Figure 7) to be formed on the pressure plate side of the backing plate. The ceramic paper and heating pad (not shown in figures 6 and 7) fit in this recess. As explained above, the heating pad is in contact with the inward facing surface 132 of the pressure plate 13. This inward facing surface also fits within the recess of the backing plate along with a portion of the pressure plate when the sealing head 10 is assembled.

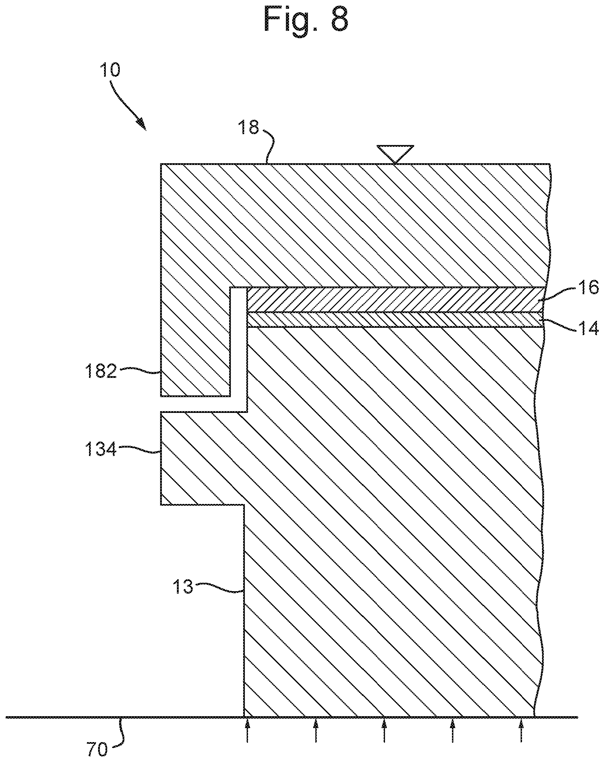

The pressure plate 13 also has a protrusion 134 around its side. When assembled, the protrusion extends outwardly from the side of the pressure plate to a distance at which it matches the perimeter around the backing plate 18 provided by the upstanding wall 182. As explained in more detail below in relation to Figure 8, there is a gap between the protrusion of the pressure plate and the wall when the sealing head is assembled.

Figure 7 also shows an outline 122 that indicates where the sealing surface 12 of the pressure plate 13 makes contact with the plate 110 of the chemical cartridge 100. This outline is shown for illustrative purposes and does not appear on the sealing surface. However, this shows that the sealing surface is sized to fit over all of the wells 120, 130 of the chemical cartridge simultaneously and extend over the plate of the chemical cartridge around the wells thereby allowing the foil sheet sealing member to form a seal around each respective well.

A portion of the sealing head 10 is shown in Figure 8. This shows the sealing head assembled with the pressure plate 13 placed with the sealing surface against a sealing member 70. The heating pad 14 and the ceramic paper 16 are located between the pressure plate and the backing plate 18 with the heating pad in contact with the inward facing surface 132 of the pressure plate and the ceramic paper in contact with the backing plate. Figure 8 also shows the upstanding wall 182 of the backing plate projecting towards protrusions 134 of the pressure plate.

As mentioned above, there is a gap between the upstanding wall 182 and the protrusion 134. The size of the gap varies depending on the amount of pressure that is applied to the backing plate due to compression of the ceramic paper 16 and the heating pad 14. When no pressure is applied, the heating pad has a thickness of about 0.14 mm and the ceramic paper has a thickness of about 0.80 mm, which gives a combined thickness of about 0.94 mm. When a pressure is applied to the backing plate equivalent to of about 0.34 N/mm² (about 340 kilopascals (kPa)) at the ceramic paper, which corresponds to a pressure of about 0.90 N/mm² (about 900 kPa) at the sealing surface 12, the combined thickness of the heating pad and the ceramic paper is reduced to about 0.54 mm. At these pressures the distance between the upstanding wall and the protrusion is about 0.40 mm.

As is explained in more detail below, the pressure of about 0.34 N/mm² at the ceramic paper and about 0.90 N/mm² at the sealing surface is only the initial pressure applied during the chemical cartridge sealing process. The final pressure applied during the chemical cartridge sealing is about 0.71 N/mm² (about 710 kPa) at the ceramic paper, which corresponds to a pressure of about 1.89 N/mm² (about 1890 kPa) at the sealing surface.

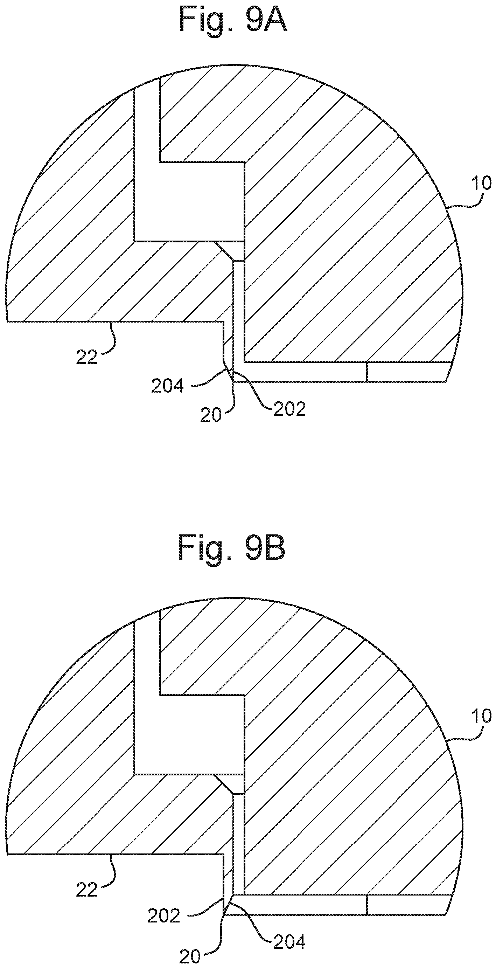

Figures 9A and 9B show alternative examples of the cutting edge 20 on the retaining plate 22. In each example, the cutting edge comprises a knife blade that protrudes from the retaining plate. The cross-section of knife blade (commonly referred to as the "grind") has a chisel shape. This provides two flat sides of the knife blade with a first side 202 being parallel to the direction in which the knife blade protrudes from the retaining plate and a second side 204 being angled relative to the first side. The difference between the two examples shown in Figure 9A and 9B is the orientation of the first and second sides of the knife blade. In the example not according to the claimed invention shown in Figure 9A, the first side of the knife blade is arranged on the inward side of the cutting edge closest to the sealing head 10 with the second side on the outward side of the cutting edge furthest from the sealing head. In the example shown in Figure 9B, the first side of the knife blade is arrange on the outward side of the cutting edge, and the second side is arranged on the inward side of the cutting edge.

The example shown in Figure 9B with the first side 202 being arranged on the outward side of the cutting edge 20 is the preferred arrangement. This is because in this orientation when the cutting edge is used to cut the sealing member 70, the pressure applied to the sealing member by the second side 204 of the knife blade seals the sealing member to the chemical cartridge 100 on the inward side of the cutting edge, which is the side of the cutting edge on which the sealing head 10 also seals the sealing member to the chemical cartridge.

### Example of chemical cartridge sealing apparatus in use

An example of the chemical cartridge sealing apparatus in use is now described.

Initially the sealing head is heated using the heating pad located between the pressure plate and the backing plate of the sealing head. The sealing head is heated to a final temperature of about 160°C to 240°C as measured by the sensor. This is achieved by providing about 150 Watts (W) of power to the heating pad. When the temperature of the sealing head is about 20°C before being heated, the sealing head takes about 540 seconds to reach the final temperature.

When the sealing head reaches the final temperature, its temperature is maintained at the final temperature. This is achieved by switching the power to the heating pad off and on sequentially based on the temperature monitored by the sensor. This allows reduction in the temperature of the sealing head due to the effect of heat loss, for example though the springs, through which there is a heat flux loss of 5 Watts per square metre (W/m²), to be kept to a minimum.

Due to the material of the pressure plate and backing plate, only a small amount of expansion occurs due to the increase in temperature. The material used for these components is Invar 36 (also known as FeNi36 or 64FeNi), which is a nickel-iron alloy. The coefficient of thermal expansion of each of the pressure plate and backing plate is about 4.2 µm/m·K. This is low compared to ordinary steels, which have a coefficient of thermal expansion of about two and a half to about three and a half times larger than that of the Invar used for the pressure plate and backing plate, and prevents the pressure plate and backing plate from expanding and becoming jammed or stuck against the inside of the retaining plate, which itself (along with the base plate) is made of a steel (a P20S steel with a Brinell Hardeness (BH) of about 300).

The sealing plate and the backing plate also have a thermal conductivity of about 10 Watts per metre Kelvin (W/m·K) and a specific heat capacity of about 515 Joules per kilogram Kelvin (J/kg·K). As a comparison, the heating pad, which is an All Polyimide heater made with copper, has a thermal conductivity of 390 W/m·K and a specific heat capacity of about 390 J/kg·K; the ceramic paper, which is a silicon paper in this example, has a thermal conductivity of about 1.5 W/m·K and a specific heat capacity of about 877 J/kg·K; and the isolation plate, which, as mentioned above is made of PEEK, has a thermal conductivity of about 0.25 W/m·K.

Once the sealing head has reached the final temperature it is ready to be used to seal a chemical cartridge. This is achieved by positioning a chemical cartridge underneath the sealing surface of the pressure plate and placing a sealing member over the chemical cartridge covering the wells in the chemical cartridge. In this example, the foil sheet sealing member has a lacquer coated on the side that is to be sealed to the chemical cartridge.

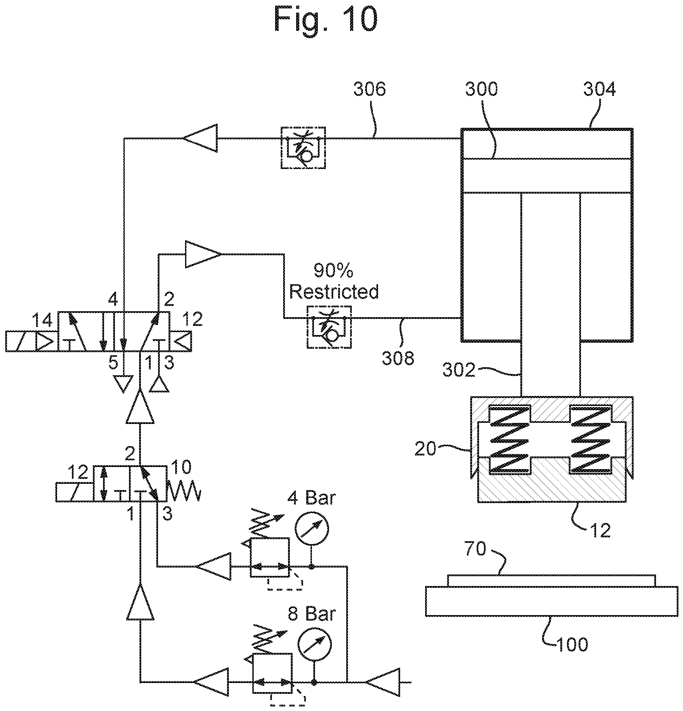

At this stage the driver of the sealing apparatus 1, shown in Figure 10, is disengaged. This driver is a pneumatic circuit, which is shown in Figure 10. The pneumatic circuit is used to drive a piston 300 that is attached to the sealing apparatus by a shaft 302. The piston is located in a sealed chamber 304 and the piston forms a barrier across the chamber thereby forming an upper portion and a lower portion of the chamber. The chamber has gas lines 306, 308 in communication with the chamber in each of the upper and lower portions. When disengaged, the piston is held in position by raised gas pressure in the lower chamber counteracting the effect of gravity on the sealing apparatus. As shown in Figure 10, this is achieved by providing about 4 Bar of pressure (about 400 kilopascals (kPa)) to the lower portion of the chamber.

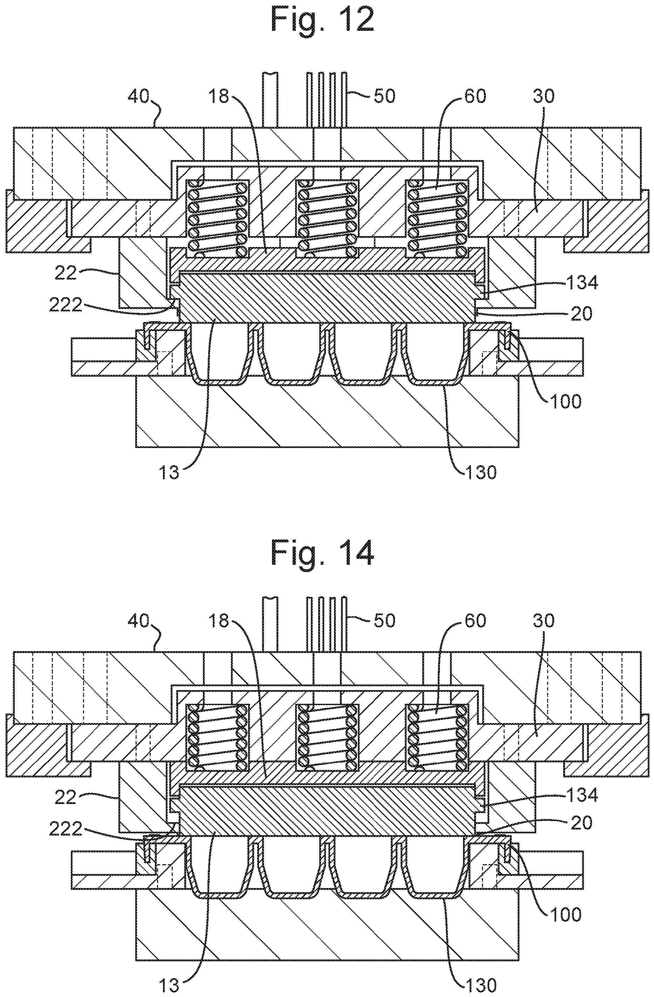

When the sealing apparatus 1 is held in this position, the springs 60 push the backing plate and pressure plate as far forward within the retaining plate 22 as possible. This causes the sealing surface 12 to extend beyond the cutting edge 20 leaving the cutting edge located around the side of the sealing plate 13. The forward movement of the sealing plate is limited due to the protrusion 134 of the sealing plate abutting an inwardly projecting shelf 222 of the retaining plate (shown in Figure 12). The shelf therefore provides a stop that prohibits movement of the sealing plate and other components attached to the sealing plate (further) past the cutting edge.

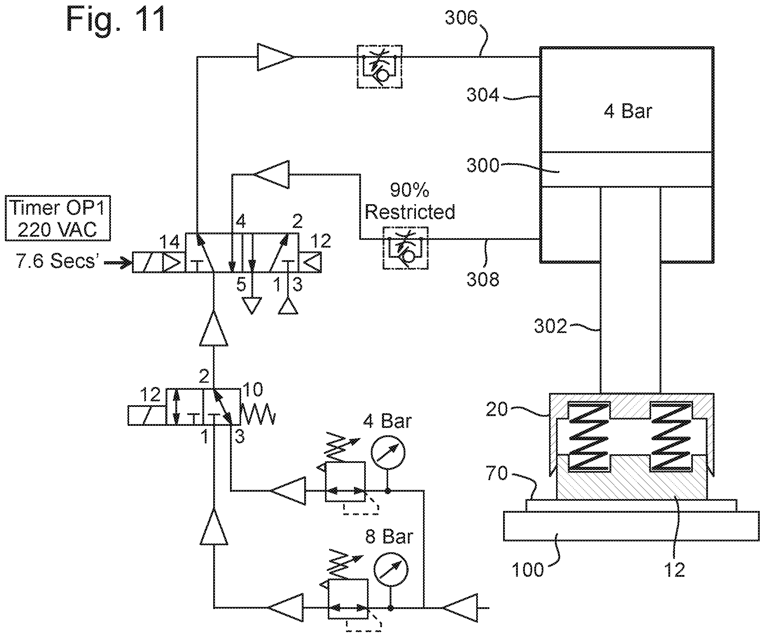

To seal the sealing member to the chemical cartridge, the sealing surface 12 is brought into contact with the sealing member. This is achieved, as shown by Figure 11, by allowing gas to flow out of the lower portion of the chamber 304 and providing about 4 Bar of pressure to the upper portion of the chamber. This pushes the sealing apparatus towards the sealing member.

When the sealing surface comes into contact with the sealing member, as shown in Figure 12, pressure continues to be applied to the sealing apparatus by the pneumatic circuit and piston. This causes pressure to be applied to the sealing member at the sealing surface. Additionally, heat is applied to the sealing member due to the sealing plate having a temperature of 200°C.

The pressure applied to the sealing member at the sealing surface rises to about 0.90 N/mm² at which point the springs are caused to compress. This causes a constant pressure to be applied to the sealing member with each spring providing a force of about 263 Newtons (N) to the backing plate. As indicated in Figure 11, this pressure is applied for about 7.6 seconds.

Due to the compression of the springs, the cutting edge 20 moves closer to the sealing member. However, it does not come into contact with the sealing member at this stage. This movement of the cutting edge towards the sealing member is due to the protrusion 134 of the pressure plate 13 no longer abutting the shelf 222 of the retaining plate 22 as springs get compressed and the distance between backing plate 14 and the base plate 30 is reduced moving the shelf of the retaining plate away from the protrusion of the pressure plate.

By the end of the 7.6 seconds over which pressure is applied, the sealing member is sealed to the chemical cartridge. This is achieved due to the applied heat and pressure causing the lacquer coat on the sealing surface to bond with the chemical cartridge.

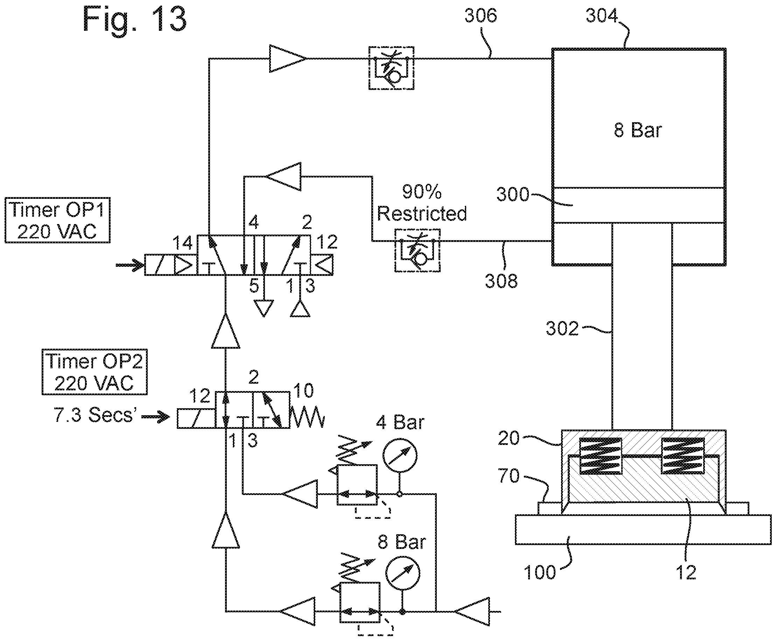

As shown in Figure 13, the gas pressure in the upper portion of the chamber 304 is then increased to about 8 Bar (800 kPa). This is applied for between about 2 and about 300 milliseconds. This causes a pressure of about 1.89 N/mm² to be applied to the sealing member. Additionally, this forces the cutting edge 20 through the sealing member into the plate 110 of the chemical cartridge 100 thereby cutting the sealing member as shown in Figures 13 and 14.

Once the cutting edge 20 has cut the sealing member, the springs are fully compressed with the backing plate 18 in contact with the base plate 30. Accordingly, the cutting edge extends past the sealing surface 12.

The pressure in the upper portion of the chamber 304 is then released and the sealing apparatus 1 is raised out of contact with the chemical cartridge and sealing member by providing a higher gas pressure in the lower portion of the chamber than in the upper portion of the chamber. The chemical cartridge with the sealing member sealed thereto is then moved away for packing or further processing and a further chemical cartridge is put in its place with a new sealing member placed over it as described above.

In an example not shown in the diagrams, the retaining plate has a plurality of cutting edges and a plurality of sealing plates. Each of the cutting edges is located around one of sealing plates and the method described above is used to seal a plurality of chemical cartridges at the same time.

As a further example, the cutting edge is shaped so as to act as a guillotine. This is achieved by having a longer blade at one point around the cutting edge and a shorter blade at an opposing point around the cutting edge with a tapered blade between the two opposing points. This provides a leading edge of the cutting edge that pierces the sealing member before other parts of the cutting edge and a trailing edge that pierces the sealing member last.

Additionally, in any example the cutting edge is able to be jig ground to provide a cutting edge that is hardened for toughness.

In another example, the same cartridge, sealing apparatus and sealing method as set out above can be used for a non-chemical application. Such an application includes cartridges suitable for food, dry goods or to package items like electronics.

While in the examples described above the cartridge has a plurality of wells (such as the cartridge 100 shown in Figure 1), in other examples, the cartridge has a single well. The uses of the cartridge may be any of those set out above. In one example, the cartridge is a container comprising a well in which a product is able to be located. This well is able to be sealed with foil using the process set out above. This causes the foil to provide a lid for the container. This is one of a multiple of applications of the sealing apparatus and process described above.

## Claims

1. A cartridge sealing apparatus (1) comprising:
a sealing head (10) having a sealing surface (12), the sealing head being adapted in use to hold a sealing member (70) against a surface of a cartridge (100) by application of pressure to the sealing member at the sealing surface across a portion of the sealing member, a bonding layer being present between the sealing member and the cartridge thereby causing the sealing member to seal the cartridge when held against the surface of the cartridge; and
a cutting edge (20) arranged around the sealing head, wherein the cutting edge is configured to move when the sealing member is held against the surface of the cartridge by the sealing head, from an unextended position, in which the cutting edge is located adjacent the sealing head, to an extended position, in which the cutting edge is adapted to cut the sealing member by forcing the cutting edge through the sealing member into the surface of the cartridge, wherein the cutting edge is a knife blade with a chisel grind having a first side 202 parallel to a side of the sealing head and a second side 204 at an angle to the first side, the second side being on a proximal side of the cutting edge to the sealing head.

2. The cartridge sealing apparatus (1) according to claim 1, wherein the cartridge (100) is a chemical cartridge suitable for holding one or more chemical reagents.

3. The cartridge sealing apparatus (1) according to claim 1 or claim 2, wherein the sealing head (10) and cutting edge (20) are adapted to move in a single continuous movement relative to each other to seal the sealing member (70) to the cartridge (100) and cut the sealing member.

4. The cartridge sealing apparatus (1) according to any one of claim 1, claim 2 or claim 3, further comprising a heater configured to provide heat to the sealing head (10) in use, and preferably the heater is thermally coupled to the sealing head.

5. The cartridge sealing apparatus (1) according to claim 4, wherein the heater is a heating pad (14) having a shape corresponding to the shape of the sealing surface (12).

6. The cartridge sealing apparatus (1) according to claim 4 or claim 5, wherein the heater is configured to heat the sealing surface (12) to about 200 degrees centigrade (°C), and/or wherein the sealing head (10) further comprises a heat sink (18).

7. The cartridge sealing apparatus (1) according to any one of claims 4 to 6, further comprising a temperature sensor (19) coupled to the sealing head (10).

8. The cartridge sealing apparatus (1) according to any one of the preceding claims, wherein the cutting edge (20) is arranged around the perimeter of the sealing surface (12) so as to cut the sealing member (70) at the perimeter of the sealing surface.

9. The cartridge sealing apparatus (1) according to any one of the preceding claims, wherein the sealing head (10) and cutting edge (20) form a unitary body, the sealing head being moveable relative to the cutting edge to move the cutting edge between the unextended position and the extended position, and preferably the sealing head is urged to a first position in which the cutting edge is in the unextended position, and further preferably a biasing member is configured to urge the sealing head into the first position, and still further preferably the biasing member is a resiliently deformable member, and yet further preferably the resiliently deformable member is an array of compression springs (60).

10. The cartridge sealing apparatus (1) according to claim 9, wherein the sealing head (10) is moveable from the first position to a second position by the application of a first force having a component perpendicular to the sealing surface (12) when the sealing head is holding the sealing member (70) against the cartridge (100) thereby sealing the cartridge, the cutting edge (20) being closer to the sealing surface in the second position than in the first position, and preferably the sealing head is adapted to apply uniform pressure to the sealing member on movement of the sealing head from the first position to the second position.

11. The cartridge sealing apparatus (1) according to claim 10, wherein the sealing head (10) is moveable from the second position to a third position by application of a second force having a component perpendicular to the sealing surface (12) when the sealing head is holding the sealing member (70) against the cartridge (100), movement of the sealing head from the second to the third position causing the cutting edge to move from the unextended position to the extended position, and/or the second force is greater than the first force.

12. The cartridge sealing apparatus (1) according to any one of the preceding claims, wherein the sealing head (10) is adapted to apply a pressure of about 0.90 Newtons per square millimetre (N/mm²) at the sealing surface (12) to seal the cartridge, and/or the sealing head is adapted to apply a pressure of about 1.89 N/mm² at the sealing surface when the cutting edge (20) moves from the unextended position to the extended position.

13. A method of sealing a cartridge (100), the method comprising:
applying pressure to a sealing member (70) at a sealing surface (12) of a sealing head (10) to hold a portion of the sealing member against a surface (110) of the cartridge, a bonding layer being present between the sealing member and the cartridge thereby causing the sealing member to seal the cartridge when held against the surface of the cartridge; and
cutting the sealing member with a cutting edge (20) arranged around the sealing head while the sealing member is held against the surface of the cartridge by moving from an unextended position, in which the cutting edge is located adjacent the sealing head, to an extended position, in which the cutting edge cuts the sealing member by forcing the cutting edge through the sealing member into the surface of the cartridge, wherein the cutting edge is a knife blade with a chisel grind having a first side (202) parallel to a side of the sealing head and a second side (204) at an angle to the first side, the second side being on a proximal side of the cutting edge to the sealing head.

14. The method according to claim 13, wherein the sealing member (70) is sealed to the cartridge (100) before the sealing member is cut, and/or the sealing head (10) and cutting edge (20) move in a single continuous movement relative to each other to seal the sealing member to the cartridge and cut the sealing member.

15. The method according to claim 13 or claim 14, wherein a first pressure is applied to the sealing member (70) when sealing the sealing member to the cartridge (100), and the method further comprising applying a second pressure to the sealing member at the sealing surface (12) when cutting the sealing member, and preferably the second pressure is greater than the first pressure.

## Patentansprüche

1. Kartuschenabdichtungseinrichtung (1), umfassend:
einen Dichtungskopf (10) mit einer Dichtungsoberfläche (12), wobei der Dichtungskopf bei der Verwendung angepasst ist, um ein Dichtungselement (70) gegen eine Oberfläche einer Kartusche (100) zu halten, indem Druck auf das Dichtungselement an der Dichtungsoberfläche über einen Abschnitt des Dichtungselements ausgeübt wird, wobei eine Verbindungsschicht zwischen dem Dichtungselement und der Kartusche vorhanden ist, wobei dadurch bewirkt wird, dass das Dichtungselement die Kartusche abdichtet, wenn es gegen die Oberfläche der Kartusche gehalten wird; und
eine Schneidkante (20), die um den Dichtungskopf herum angeordnet ist, wobei die Schneidkante dazu konfiguriert ist, sich, wenn das Dichtungselement durch den Dichtungskopf gegen die Oberfläche der Kartusche gehalten wird, von einer nicht ausgefahrenen Position, in der sich die Schneidkante neben dem Dichtungskopf befindet, in eine ausgefahrene Position zu bewegen, in der die Schneidkante angepasst ist, um das Dichtungselement zu schneiden, indem die Schneidkante durch das Dichtungselement in die Oberfläche der Kartusche gepresst wird, wobei die Schneidkante eine Messerklinge mit einem Meißelschliff ist, die eine erste Seite 202 parallel zu einer Seite des Dichtungskopfes und eine zweite Seite 204 in einem Winkel zu der ersten Seite aufweist, wobei sich die zweite Seite auf einer proximalen Seite der Schneidkante zu dem Dichtungskopf befindet.

2. Kartuschenabdichtungseinrichtung (1) nach Anspruch 1, wobei die Kartusche (100) eine chemische Kartusche ist, die für die Aufnahme eines oder mehrerer chemischer Reagenzien geeignet ist.

3. Kartuschenabdichtungseinrichtung (1) nach Anspruch 1 oder 2, wobei der Dichtungskopf (10) und die Schneidkante (20) angepasst sind, um sich in einer einzigen kontinuierlichen Bewegung relativ zueinander zu bewegen, um das Dichtungselement (70) an der Kartusche (100) abzudichten und das Dichtungselement zu schneiden.

4. Kartuschenabdichtungseinrichtung (1) nach einem der Ansprüche 1, 2 oder 3 ferner umfassend eine Heizvorrichtung, die dazu konfiguriert ist, dem Dichtungskopf (10) bei Verwendung Wärme bereitzustellen, und vorzugsweise die Heizvorrichtung thermisch mit dem Dichtungskopf gekoppelt ist.

5. Kartuschenabdichtungseinrichtung (1) nach Anspruch 4, wobei die Heizvorrichtung ein Heizkissen (14) ist, das eine Form aufweist, die der Form der Dichtungsoberfläche (12) entspricht.

6. Kartuschenabdichtungseinrichtung (1) nach Anspruch 4 oder 5, wobei das Heizelement dazu konfiguriert ist, die Dichtungsoberfläche (12) auf etwa 200 Grad Celsius (°C) zu erwärmen, und/oder wobei der Dichtungskopf (10) ferner einen Kühlkörper (18) umfasst.

7. Kartuschenabdichtungseinrichtung (1) nach einem der Ansprüche 4 bis 6, ferner umfassend einen Temperatursensor (19), der mit dem Dichtungskopf (10) gekoppelt ist.

8. Kartuschenabdichtungseinrichtung (1) nach einem der vorhergehenden Ansprüche, wobei die Schneidkante (20) um den Umfang der Dichtungsoberfläche (12) angeordnet ist, um das Dichtungselement (70) an dem Umfang der Dichtungsoberfläche zu schneiden.

9. Kartuschenabdichtungseinrichtung (1) nach einem der vorhergehenden Ansprüche, wobei der Dichtungskopf (10) und die Schneidkante (20) einen einheitlichen Körper ausbilden, wobei der Dichtungskopf relativ zu der Schneidkante beweglich ist, um die Schneidkante zwischen der nicht ausgefahrenen Position und der ausgefahrenen Position zu bewegen, und vorzugsweise der Dichtungskopf in eine erste Position gedrängt wird, in der sich die Schneidkante in der nicht ausgefahrenen Position befindet, und stärker bevorzugt ein Vorspannelement dazu konfiguriert ist, den Dichtungskopf in die erste Position zu drängen, und noch stärker bevorzugt das Vorspannelement ein elastisch verformbares Element ist, und noch stärker bevorzugt das elastisch verformbare Element eine Anordnung von Druckfedern (60) ist.

10. Kartuschenabdichtungseinrichtung (1) nach Anspruch 9, wobei der Dichtungskopf (10) von der ersten Position in eine zweite Position durch die Anwendung einer ersten Kraft mit einer Komponente senkrecht zu der Dichtungsoberfläche (12) beweglich ist, wenn der Dichtungskopf das Dichtungselement (70) gegen die Kartusche (100) hält, wobei dadurch die Kartusche abgedichtet wird, wobei die Schneidkante (20) in der zweiten Position näher an der Dichtungsoberfläche ist als in der ersten Position, und vorzugsweise der Dichtungskopf angepasst ist, um bei der Bewegung des Dichtungskopfes von der ersten Position in die zweite Position einen gleichmäßigen Druck auf das Dichtungselement auszuüben.

11. Kartuschenabdichtungseinrichtung (1) nach Anspruch 10, wobei der Dichtungskopf (10) durch Anwendung einer zweiten Kraft, die eine Komponente senkrecht zu der Dichtungsoberfläche (12) aufweist, wenn der Dichtungskopf das Dichtungselement (70) gegen die Kartusche (100) hält, von der zweiten Position in eine dritte Position beweglich ist, wobei die Bewegung des Dichtungskopfes von der zweiten in die dritte Position bewirkt, dass sich die Schneidkante von der nicht ausgefahrenen Position in die ausgefahrene Position bewegt, und/oder die zweite Kraft größer als die erste Kraft ist.

12. Kartuschenabdichtungseinrichtung (1) nach einem der vorhergehenden Ansprüche, wobei der Dichtungskopf (10) angepasst ist, um einen Druck von etwa 0,90 Newton pro Quadratmillimeter (N/mm²) auf die Dichtungsoberfläche (12) anzuwenden, um die Kartusche abzudichten, und/oder der Dichtungskopf angepasst ist, um einen Druck von etwa 1,89 N/mm² auf die Dichtungsoberfläche anzuwenden, wenn sich die Schneidkante (20) von der nicht ausgefahrenen Position in die ausgefahrene Position bewegt.

13. Verfahren zum Abdichten einer Kartusche (100), wobei das Verfahren umfasst:
Anwenden von Druck auf ein Dichtungselement (70) an einer Dichtungsoberfläche (12) eines Dichtungskopfes (10), um einen Abschnitt des Dichtungselements gegen eine Oberfläche (110) der Kartusche zu halten, wobei eine Verbindungsschicht zwischen dem Dichtungselement und der Kartusche vorhanden ist, wobei dadurch bewirkt wird, dass das Dichtungselement die Kartusche abdichtet, wenn es gegen die Oberfläche der Kartusche gehalten wird; und
Schneiden des Dichtungselements mit einer Schneidkante (20), die um den Dichtungskopf herum angeordnet ist, während das Dichtungselement gegen die Oberfläche der Kartusche gehalten wird, indem es von einer nicht ausgefahrenen Position, in der sich die Schneidkante neben dem Dichtungskopf befindet, in eine ausgefahrene Position bewegt wird, in der die Schneidkante das Dichtungselement schneidet, indem die Schneidkante durch das Dichtungselement in die Oberfläche der Kartusche gepresst wird, wobei die Schneidkante eine Messerklinge mit einem Meißelschliff ist, die eine erste Seite (202) parallel zu einer Seite des Dichtungskopfes und eine zweite Seite (204) in einem Winkel zu der ersten Seite aufweist, wobei sich die zweite Seite auf einer zu dem Dichtungskopf proximalen Seite der Schneidkante befindet.

14. Verfahren nach Anspruch 13, wobei das Dichtungselement (70) mit der Kartusche (100) abgedichtet wird, bevor das Dichtungselement geschnitten wird, und/oder sich der Dichtungskopf (10) und die Schneidkante (20) in einer einzigen kontinuierlichen Bewegung relativ zueinander bewegen, um das Dichtungselement mit der Kartusche abzudichten und das Dichtungselement zu schneiden.

15. Verfahren nach Anspruch 13 oder 14, wobei ein erster Druck auf das Dichtungselement (70) angewendet wird, wenn das Dichtungselement an der Kartusche (100) abgedichtet wird, und das Verfahren ferner das Anwenden eines zweiten Drucks auf das Dichtungselement an der Dichtungsoberfläche (12) umfasst, wenn das Dichtungselement geschnitten wird, und vorzugsweise der zweite Druck größer ist als der erste Druck.

## Revendications

1. Appareil de scellement de cartouche (1) comprenant :
une tête de scellement (10) ayant une surface de scellement (12), la tête de scellement étant conçue pour maintenir en utilisation un élément de scellement (70) contre une surface d'une cartouche (100) par application d'une pression sur l'élément de scellement au niveau de la surface de scellement sur une partie de l'élément de scellement, une couche de liaison étant présente entre l'élément de scellement et la cartouche, amenant ainsi l'élément de scellement à sceller la cartouche lorsqu'il est maintenu contre la surface de la cartouche ; et
un bord de coupe (20) disposé autour de la tête de scellement, le bord de coupe étant configuré pour se déplacer lorsque l'élément de scellement est maintenu contre la surface de la cartouche par la tête de scellement, d'une position non étendue, dans laquelle le bord de coupe est situé à côté de la tête de scellement, à une position étendue, dans laquelle le bord de coupe est adapté pour couper l'élément de scellement en forçant le bord de coupe à travers l'élément de scellement dans la surface de la cartouche, le bord de coupe étant une lame de couteau avec une meule en ciseau ayant un premier côté 202 parallèle à un côté de la tête de scellement et un deuxième côté 204 à un angle par rapport au premier côté, le deuxième côté étant sur un côté proximal du bord de coupe par rapport à la tête de scellement.

2. Appareil de scellement de cartouche (1) selon la revendication 1, dans lequel la cartouche (100) est une cartouche chimique adaptée pour contenir un ou plusieurs réactifs chimiques.

3. Appareil de scellement de cartouche (1) selon la revendication 1 ou la revendication 2, dans lequel la tête de scellement (10) et le bord de coupe (20) sont adaptés pour se déplacer dans un seul mouvement continu l'un par rapport à l'autre pour sceller l'élément de scellement (70) à la cartouche (100) et couper l'élément de scellement.

4. Appareil de scellement de cartouche (1) selon l'une quelconque des revendications 1, 2 ou 3, comprenant en outre un élément chauffant configuré pour fournir de la chaleur à la tête de scellement (10) lors de l'utilisation, et de préférence l'élément chauffant est couplé thermiquement à la tête de scellement.

5. Appareil de scellement de cartouche (1) selon la revendication 4, dans lequel l'élément chauffant est un coussin chauffant (14) ayant une forme correspondant à la forme de la surface de scellement (12).

6. Appareil de scellement de cartouche (1) selon la revendication 4 ou la revendication 5, dans lequel le dispositif de chauffage est configuré pour chauffer la surface de scellement (12) à environ 200 degrés centigrades (°C), et/ou dans lequel la tête de scellement (10) comprend en outre un dissipateur thermique (18).

7. Appareil de scellement de cartouche (1) selon l'une quelconque des revendications 4 à 6, comprenant en outre un capteur de température (19) couplé à la tête de scellement (10).

8. Appareil de scellement de cartouche (1) selon l'une quelconque des revendications précédentes, dans lequel le bord de coupe (20) est disposé autour du périmètre de la surface de scellement (12) de manière à couper l'élément de scellement (70) au niveau du périmètre de la surface de scellement.

9. Appareil de scellement de cartouche (1) selon l'une quelconque des revendications précédentes, dans lequel la tête de scellement (10) et le bord de coupe (20) forment un corps unitaire, la tête de scellement étant mobile par rapport au bord de coupe pour déplacer le bord de coupe entre la position non étendue et la position étendue, et de préférence la tête de scellement est poussée vers une première position dans laquelle le bord de coupe est dans la position non étendue, et de préférence encore un élément de sollicitation est configuré pour pousser la tête de scellement dans la première position, et de préférence encore l'élément de sollicitation est un élément déformable de manière élastique, et de préférence encore l'élément déformable de manière élastique est un ensemble de ressorts de compression (60).

10. Appareil de scellement de cartouche (1) selon la revendication 9, dans lequel la tête de scellement (10) est mobile de la première position à une deuxième position par l'application d'une première force ayant une composante perpendiculaire à la surface de scellement (12) lorsque la tête de scellement maintient l'élément de scellement (70) contre la cartouche (100), scellant ainsi la cartouche, le bord de coupe (20) étant plus proche de la surface de scellement dans la deuxième position que dans la première position, et de préférence la tête de scellement est adaptée pour appliquer une pression uniforme à l'élément de scellement lors du mouvement de la tête de scellement de la première position à la deuxième position.

11. Appareil de scellement de cartouche (1) selon la revendication 10, dans lequel la tête de scellement (10) est mobile de la deuxième position à une troisième position par application d'une deuxième force ayant une composante perpendiculaire à la surface de scellement (12) lorsque la tête de scellement maintient l'élément de scellement (70) contre la cartouche (100), le mouvement de la tête de scellement de la deuxième à la troisième position provoquant le déplacement du bord de coupe de la position non étendue à la position étendue, et/ou la deuxième force est supérieure à la première force.

12. Appareil de scellement de cartouche (1) selon l'une quelconque des revendications précédentes, dans lequel la tête de scellement (10) est conçue pour appliquer une pression d'environ 0,90 Newton par millimètre carré (N/mm² ) au niveau de la surface de scellement (12) pour sceller la cartouche, et/ou la tête de scellement est conçue pour appliquer une pression d'environ 1,89 N/mm² au niveau de la surface de scellement lorsque le bord de coupe (20) se déplace de la position non étendue à la position étendue.

13. Procédé de scellement d'une cartouche (100), le procédé comprenant les étapes consistant à :
appliquer une pression sur un élément de scellement (70) au niveau d'une surface de scellement (12) d'une tête de scellement (10) pour maintenir une partie de l'élément de scellement contre une surface (110) de la cartouche, une couche de liaison étant présente entre l'élément de scellement et la cartouche, amenant l'élément de scellement à sceller la cartouche lorsqu'il est maintenu contre la surface de la cartouche ; et
couper l'élément de scellement avec un bord tranchant (20) disposé autour de la tête de scellement tandis que l'élément de scellement est maintenu contre la surface de la cartouche en se déplaçant d'une position non étendue, dans laquelle le bord tranchant est situé adjacent à la tête de scellement, à une position étendue, dans laquelle le bord tranchant coupe l'élément de scellement en forçant le bord tranchant à travers l'élément de scellement dans la surface de la cartouche, le bord tranchant étant une lame de couteau avec une meule en ciseau ayant un premier côté (202) parallèle à un côté de la tête de scellement et un deuxième côté (204) à un angle par rapport au premier côté, le deuxième côté étant sur un côté proximal du bord tranchant par rapport à la tête de scellement.

14. Procédé selon la revendication 13, dans lequel l'élément de scellement (70) est scellé à la cartouche (100) avant que l'élément de scellement ne soit coupé, et/ou la tête de scellement (10) et le bord de coupe (20) se déplacent dans un seul mouvement continu l'un par rapport à l'autre pour sceller l'élément de scellement à la cartouche et couper l'élément de scellement.

15. Procédé selon la revendication 13 ou la revendication 14, dans lequel une première pression est appliquée à l'élément de scellement (70) lors du scellement de l'élément de scellement à la cartouche (100), et le procédé comprenant en outre l'application d'une deuxième pression à l'élément de scellement au niveau de la surface de scellement (12) lors de la découpe de l'élément de scellement, et de préférence la deuxième pression est supérieure à la première pression.
